# EUROPEAN PATENT APPLICATION

(11) **EP 3 547 694 A1**
(43) Date of publication of application: **02.10.2019**
(21) Application number: 18165292.6
(22) Date of filing: 30.03.2018
(51) Int. Cl.: H04N 21/422, H04N 21/438, H04N 21/482

(54) **A METHOD AND SYSTEM FOR NAVIGATING THROUGH CHANNELS IN A CONTENT RECEIVER**

(71) Applicant: Advanced Digital Broadcast S.A., 1262 Eysins (CH)
(72) Inventor: Wielgosz, Marcin, 65-119 Zielona Gora (PL)
(74) Representative: Kancelaria Eupatent.pl Sp. z.o.o

(57) **Abstract**

A computer-implemented method for navigating through channels in a content receiver (100), wherein the channels have assigned channel numbers and categories, the method comprising: providing a list of categories (1210-1280; 1310-1330); providing an ordered list of channels (1211-1212; 1311-1312) for each category (1210-1280; 1310-1330); upon receiving (1406, 1509) a channel zapping command (SIMILAR+, SIMILAR-), selecting (1407, 1510) a next channel or a previous channel (1211-1212; 1311-1312) from the list of channels for the current category (1210-1280; 1310-1330); upon receiving (1404, 1504) a category zapping command (NEXT, PREV), selecting (1405, 1508) a last watched channel (1201-1205; 1301-1303) in a next category or a previous category from the list of categories (1210-1280; 1310-1330) and changing the current category to the next category or the previous category; storing (1410, 1513) the channel number of the selected channel as the last watched channel on the current channel category; and tuning (1412, 1515) the content receiver to the selected channel.

## Description

### TECHNICAL FIELD

The present disclosure relates to a method and system for navigating through channels in a content receiver.

### BACKGROUND

Customer devices (such as digital television Set Top Boxes, STBs) offer several possibilities of receiving downstream data, such as video content, from various sources, such as a broadcasting distribution network (satellite, cable, terrestrial), the Internet (OTT, VOD) etc. An increasing amount of available channels, programs, OTT and VOD assets make it difficult to browse through the currently available content and to find a desired channel or program during a reasonable time. It may happen that the user is discouraged from looking for (zapping) a possibly more interesting channels/programs due to a burdensome process of browsing.

Therefore there is a need to provide a method and a system which would provide an easy and convenient way for navigating through channels in a content receiver.

### SUMMARY

A computer-implemented method for navigating through channels in a content receiver, wherein the channels have assigned channel numbers and categories, the method comprising: providing a list of categories; providing an ordered list of channels for each category; upon receiving a channel zapping command, selecting a next channel or a previous channel from the list of channels for the current category; upon receiving a category zapping command, selecting a last watched channel in a next category or a previous category from the list of categories and changing the current category to the next category or the previous category; storing the channel number of the selected channel as the last watched channel on the current channel category; tuning the content receiver to the selected channel.

The list of categories may contain a single instance of each category.

The list of categories may contain a plurality of entries for at least one category.

The consecutive categories on the list of categories may correspond to categories of consecutive channels in the content receiver.

Upon receiving a category zapping command, the method may comprise selecting the next channel or the previous channel with respect to the last watched channel of the current channel category.

The method may further comprise, upon receiving a command to tune to a particular channel number, selecting the requested channel and changing the current category to the category of the requested channel.

There is also disclosed a computer program comprising program code means for performing all the steps of the computer-implemented method as described herein when said program is run on a computer, as well as to a computer readable medium storing computer-executable instructions performing all the steps of the computer-implemented method as described herein when executed on a computer.

There is also disclosed a system for navigating through channels in a content receiver, the system comprising: a content receiving block for providing content of a plurality of programs; a controller configured to perform the steps of the method as described herein.

The system may further comprise a remote control unit with a dedicated section of buttons comprising at least one of: a SIMILAR- button and a SIMILAR+ button configured to select the previous channel or the next channel within the current category; a NEXT button and a PREV button configured to select the next category or the previous category; and a BACK button configured to select the previously watched channel.

### BRIEF DESCRIPTION OF DRAWINGS

The method presented herein is presented by means of example embodiments on a drawing, wherein:
Fig. 1 presents an example of a structure of a Set Top Box (STB);
Fig. 2 presents data stored in a memory 140 of the STB;
Fig. 3 presents a remote control unit 600 with a dedicated section 620 of buttons 621-627;
Fig. 4 presents a pure spatial channel list arrangement;
Fig. 5 presents a flat spatial channel list arrangement;
Figs. 6A-6B presents a process of navigating through the pure spatial channel list.
Figs. 7A-7B presents a process of navigating through the flat spatial channel list.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

In the present disclosure, the term "video content" is to be understood more broadly as multimedia content comprising video data and associated audio data and associated additional data (such as content description, etc.). The term "video content" is used to distinguish the content from other content types, such as still images or raw data (e.g. files).

### DETAILED DESCRIPTION

The system and method will be presented below with reference to an embodiment related to a television Set Top Box (STB). However, it may be implemented in an equivalent manner to other content receiving devices, such as personal computers, portable devices, smartphones, etc.

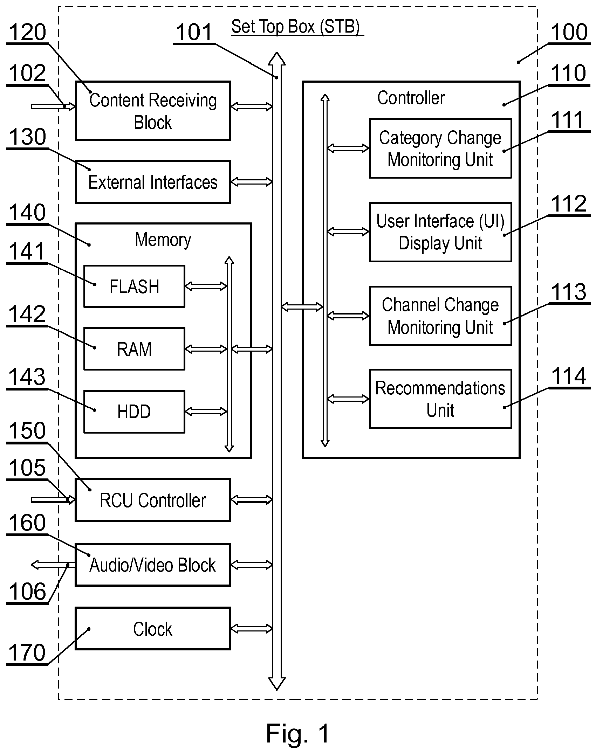

Fig. 1 presents an example of a structure of a Set Top Box (STB).

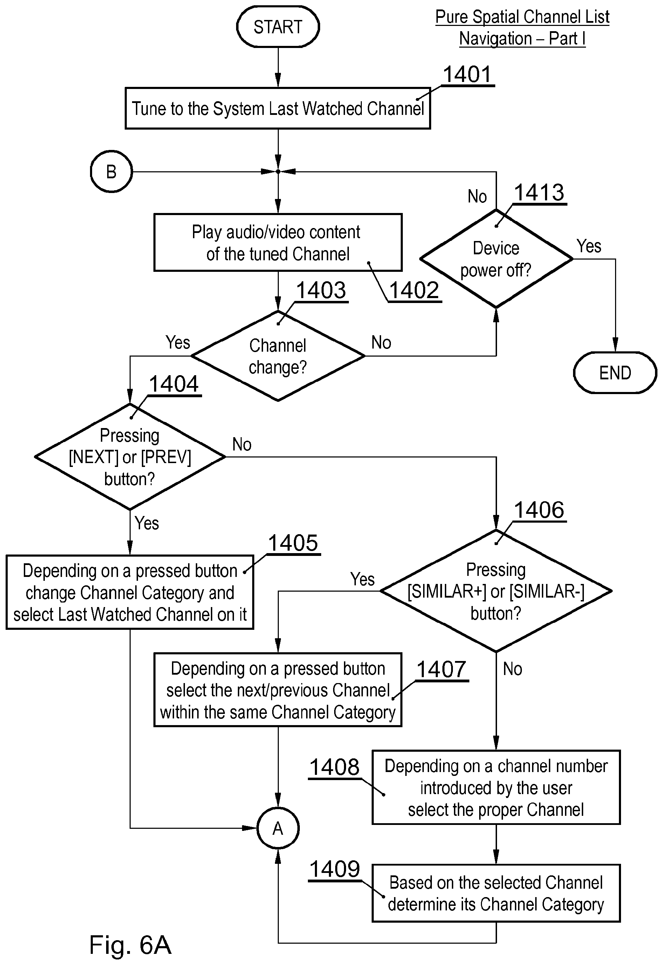

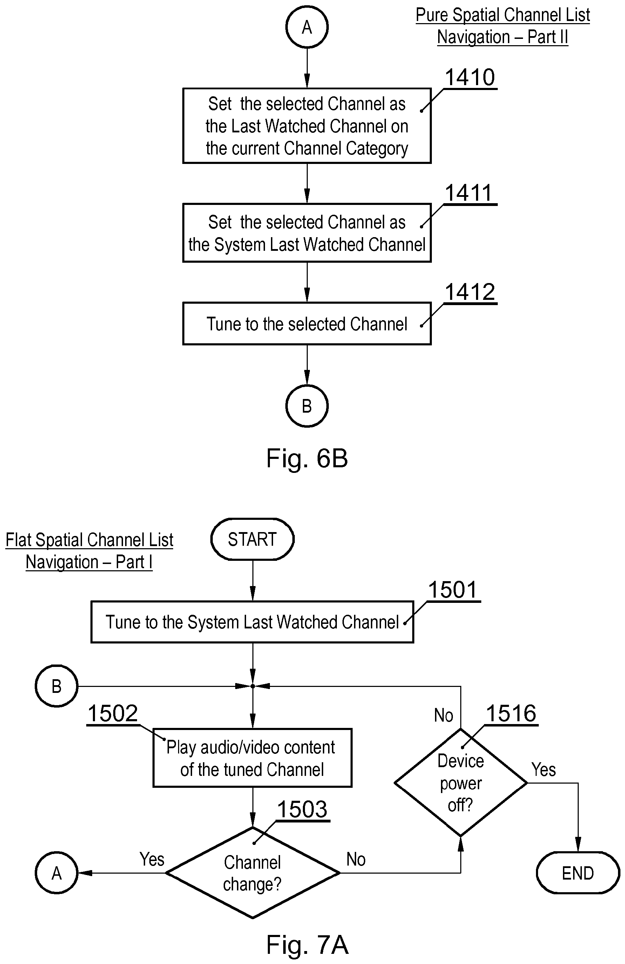

A controller 110 comprises a plurality of units configured to provide the functionality of the system as described herein in accordance with the method of Figs. 6A-7B.

A category change monitoring unit 111 is responsible for detecting a category change command.

A user interface (Ul) display unit 112 is responsible for operating the user interface.

A channel change monitoring unit 113 is responsible for detecting a channel change command.

A recommendations unit 114 is responsible for handling and providing recommendations to a user.

The STB 100 operates utilizing memory blocks 140, including RAM 142, Flash 141 blocks and a hard disk drive (HDD) 143 or another type of mass storage that can be used to store video or other data locally at the STB, but is not essential for its operation.

A clock module 170 is configured to provide timing data necessary for cooperation of the device units.

A content receiving block 120 is configured to receive downstream data 102, such as video content, from the broadcasting distribution network. The content receiving block 120 (also called a front-end block) may comprise a plurality of tuners (such as satellite, cable, terrestrial or IPTV tuners), wherein one of the tuners receives content to be displayed at the television screen to which the STB is directly connected (e.g. the STB 100 connected to a TV set) and another tuner receives content to be recorded at the HDD 143.

External interfaces 130, such as the Ethernet interface, are configured to communicate, via at least one transmission channel, with the Ethernet (IP) network or the wireless network, in order to receive applications and/or content recommendation data, as well as to transmit user or STB statistic data.

The STB is operable by the user via a remote control unit (RCU) that communicates, typically via an infrared (IR) receiver receiving an IR signal 105, with a RCU controller block 150.

An audio/video block 160 is an example of a content presentation block and configured to decode the received content, convert it to an audio/video format suitable for presentation to the user, and to transmit the converted content via a transmission channel 106 to the TV set to which the STB is directly connected.

All modules of the STB communicate with each other via one or more internal data buses 101.

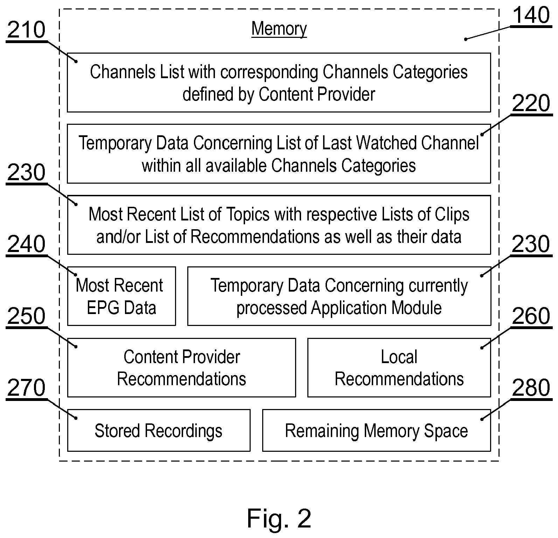

Fig. 2 presents data stored in a memory 140 of the STB. Data is stored in containers, such as tables or other data types.

A data set comprises a particular configuration, specifying a plurality of parameter types defined in data containers 210-280. That configuration can be changed by the user of the device or remotely by a system operator.

A channels list, such as television channels, with assigned channel numbers and channel categories which are defined by a content provider are stored in data set 210.

Temporary data concerning a list of last watched channels within all available channels categories is stored in data set 220.

A temporary data set 230 comprises information concerning currently processed application module, which need to store temporary data when operating.

A most recent EPG data set 240 comprises an up to date EPG (Electronic Program Guide) which provides additional data about content available from various sources (such as content delivery network or other content providers).

A content provider recommendations 250 data set comprises information concerning programs recommended by the content provider.

A local recommendations 260 data set comprises information concerning program recommendations based on current location of the user and current content provider as well as recommendations resulting from the user behavior. For example, if the STB is used by a plurality of users, each having a separately accessible user account (with separately tracked watched content or separate access to content over special channels such as VOD), then each user may receive different content recommendations (e.g. related to the favorite type of content for that particular user, for example VOD content recommendations related to user's favorite television series).

A stored recordings data set 270 comprises recordings of the programs.

The remaining memory space 280 can be used for storing other data, depending on system needs.

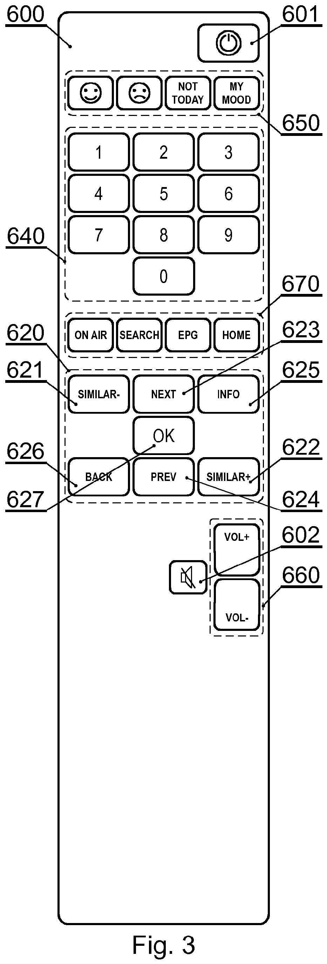

Fig. 3 presents a remote control unit 600 with a dedicated section 620 of buttons 621-627 for the functionality as described herein.

The SIMILAR- button 621 and the SIMILAR+ button 622 provide a channel zapping function

The NEXT button 623 and PREV button 624 provide a category zapping function.

The INFO button 625 allows to display additional information concerning the selected category or channel.

The BACK button 626 allows to jump to the previously watched channel.

The OK button 627 functions as a confirmation command, for example when navigating through a home screen of a user device (STB).

A section 660 comprises a volume up and volume down buttons.

A button 602 provides a mute option.

A button 601 allows to switch on and off the user device.

A section 640 comprises a numeric pad buttons.

A section 650 provides buttons for describing current mood of the user, which is determinative for suggested recommendations. For example the user may declare a sad mood and as a result the system does not recommend fun and entertaining programs but rather serious or neutral contents.

A section 670 provides buttons for selecting a content presentation screen, a search engine or the home screen.

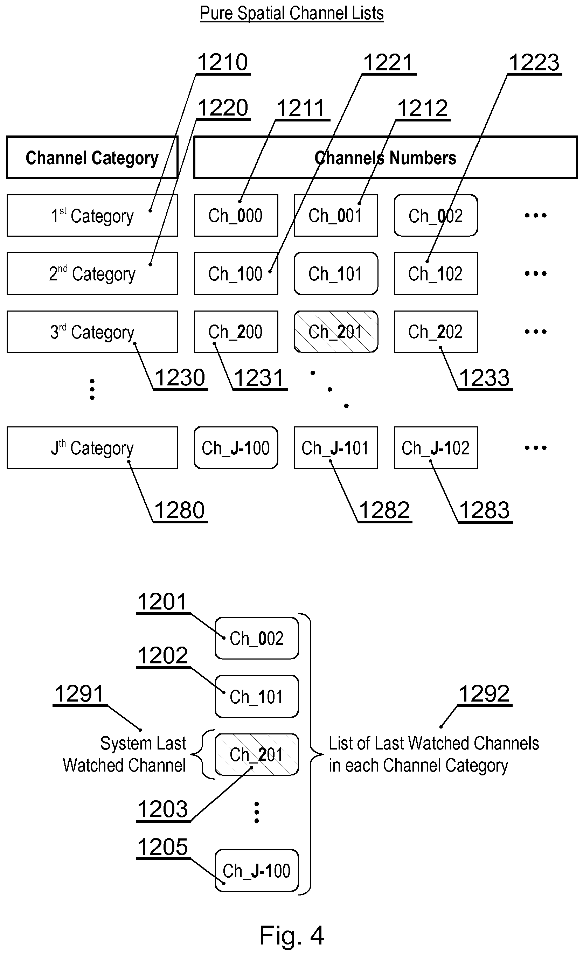

Fig. 4 presents a pure spatial channel list arrangement in which the channels 1211-1283 are grouped into categories 1210-1280. The list of categories 1210-1280 contains a single instance of each category. Each category forms a separate list of consecutively arranged channels. As presented, the 1^{st} category 1210 comprises channels (1211, 1212) having consecutive numbers Ch_000, Ch_001, Ch_002. Similarly the 2^{nd} category 1220 comprises channels (1221-1223) having consecutive numbers Ch_100, Ch_101, Ch_102. In the pure spatial channel list arrangement the category zapping (navigating) function is provided by the NEXT 623 and PREV 624 buttons. The SIMILAR+ 622 and SIMILAR- 621 buttons allow zapping through the channels present within the chosen (current) category. During zapping through the channels, the system forms a list 1292 of last watched channels 1201-1205 in each category. Therefore when the user requests the category zapping command by pushing the NEXT or PREV buttons, the system jumps to the last watched channel of the next or previous category. The last watched channel, before the user device is turned off, becomes the system last watched channel 1291 which is tuned upon powering on of the device.

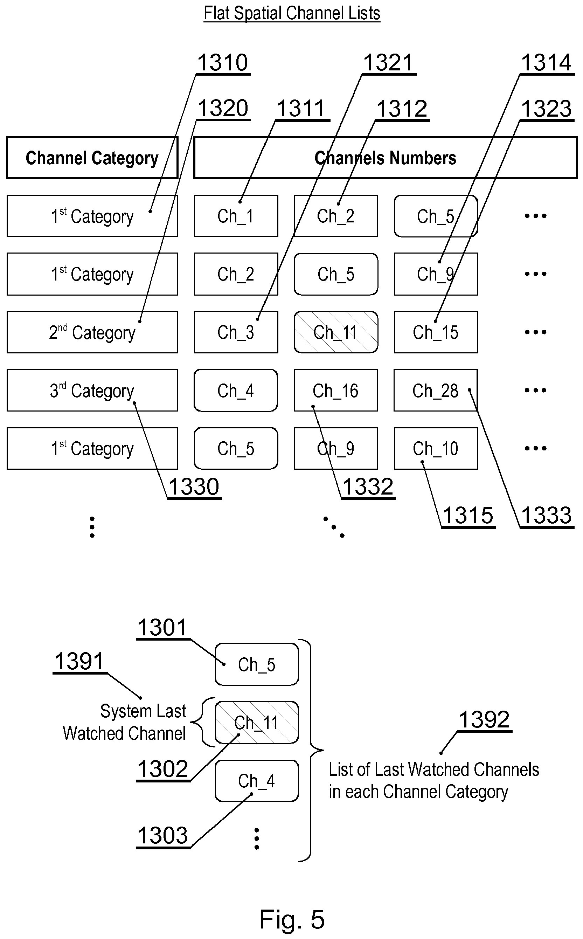

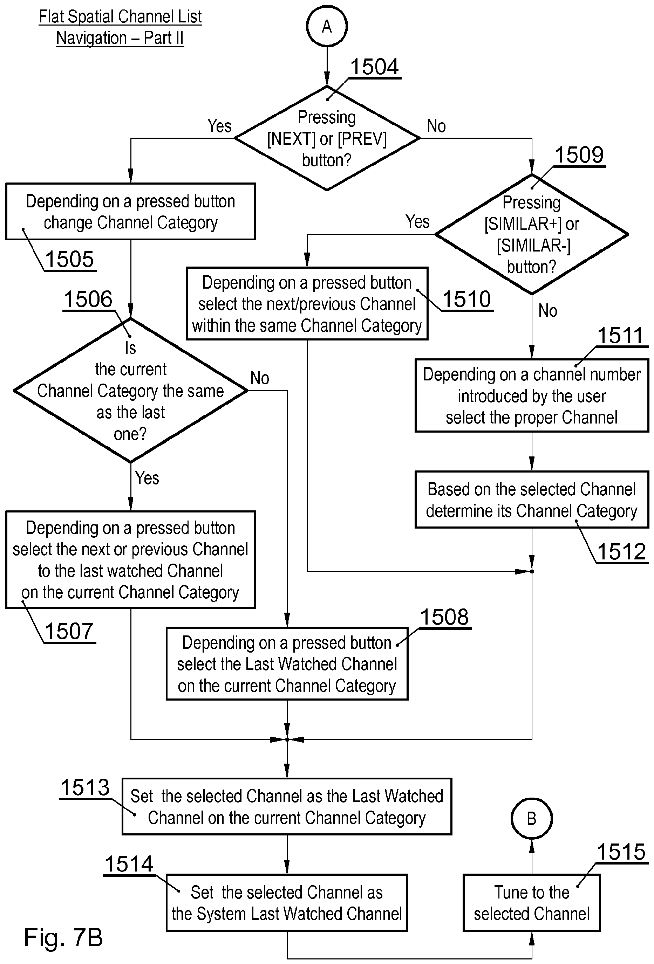

Fig. 5 presents a flat spatial channel list arrangement in which the channels 1311-1333 are arranged consecutively according to their number as presented in a first column starting with channel Ch_1 1311. The order of the channels 1311-1333 is not dependent on their channel category 1310-1330. The list of categories 1310-1330 contains a plurality of entries for at least one category. Therefore, often the neighboring channels belong to different categories, for example Ch_2 belongs to the 1^{st} category, Ch_3 belongs to the 2^{nd} category while Ch_5 again belongs to the 1^{st} category. As presented, the consecutive categories on the list of categories 1310-1330 correspond to categories of consecutive channels in the content receiver, therefore the channels belonging to the same channel category do not necessarily have consecutive channel numbers, however they are arranged increasingly according to their channel number. In the flat channel list arrangement the NEXT 623 and PREV 624 buttons allow zapping through the categories of the channels. However if the chosen channel category (the one the user jumped to) is the same as the last category, then the next or previous channel of the same category is selected (as presented in Fig. 7B in step 1506). The SIMILAR+ 622 and SIMILAR- 621 buttons allow zapping through the channels which belong to the same category. For example when the user is currently watching Ch_2 channel, pressing the SIMILAR+ button will result in jumping to the Ch_5 channel. During zapping through the channels, the system forms a list 1392 of last watched channels 1301-1303 in each category. Therefore when the user requests the category zapping command by pushing the NEXT or PREV buttons, the system jumps to the last watched channel of the next or previous category (unless the chosen category is the same as the last one). The last watched channel, before the user device is turned off, becomes the system last watched channel 1391 which is tuned upon powering on of the device.

Figs. 6A-6B presents a process of navigating through the pure spatial channel list. First, in step 1401, typically upon powering on, the STB is tuned to the system last watched channel. Next, in step 1402 an audio/video content of the tuned channel is played. Next, in step 1403 it is checked if a channel change request was sent by the user. If not, then in step 1413 it is checked if a power off command was sent for the device, and if so, the procedure terminates. Otherwise, the procedure loops back to step 1402. If in step 1403 the channel change request was received, then in step 1404 it is checked if the category zapping command was requested by pressing the NEXT or PREV button. If yes, then in step 1405 depending on the pressed button, the channel category is changed and the last watched channel within the chosen category is selected. Next, in step 1410 the channel number, of the selected channel, is stored as the last watched channel on the current channel category. Next, in step 1411 the channel number of the selected channel is stored as the system last watched channel. Next in step 1412 the selected channel is tuned and the procedure loops back to step 1402. If in step 1404, the NEXT or PREV button was not pressed, then in step 1406 it is checked if the channel zapping command was requested by pressing the SIMILAR+ or SIMILAR- button. If yes, then in step 1407 depending on the pressed button the next or previous channel within the same channel category is selected. Next the procedure moves to step 1410. If in step 1406 the SIMILAR+ nor the SIMILAR- button was pressed, then in step 1408 depending on a channel number introduced by the user the proper channel is selected. Next, in step 1409 based on the selected channel, its channel category is determined and the procedure moves to step 1410.

Figs. 7A-7B presents a process of navigating through the flat spatial channel list. First, in step 1501, typically upon powering on, the STB is tuned to the system last watched channel. Next, in step 1502 an audio/video content of the tuned channel is played. Next, in step 1503 it is checked if a channel change request was sent by the user. If not, then in step 1516 it is checked if a power off command was sent for the device, and if so, the procedure terminates. Otherwise, the procedure loops back to step 1502. If in step 1503 the channel change request was received, then in step 1504 it is checked if the category zapping command was requested by pressing the NEXT or PREV button. If yes, then in step 1505 depending on the pressed button the channel category is changed. Next, in step 1506 it is checked if the current channel category is the same as the last one. If not, then in step 1508 depending on the pressed button the last watched channel on the current channel category is selected. Next, in step 1513 the channel number, of the selected channel, is stored as the last watched channel on the current channel category. Next, in step 1514 the channel number of the selected channel is stored as the system last watched channel. Next, in step 1515 the selected channel is tuned and the procedure loops back to step 1502. If in step 1506 the current channel category is the same as the last one, then in step 1507 depending on the pressed button the next or previous channel with respect to the last watched channel is selected on the current channel category and the procedure moves to step 1513. If in step 1504 the NEXT or PREV button was not pressed, then in step 1509 it is checked if the channel zapping command was requested by pressing the SIMILAR+ or SIMILAR- button. If yes, then in step 1510 depending on the pressed button the next or previous channel within the same channel category is selected. Next the procedure moves to step 1513. If in step 1509 the SIMILAR+ or the SIMILAR- button was not pressed, then in step 1511 depending on a channel number introduced by the user the proper channel is selected. Next, in step 1512 based on the selected channel, its channel category is determined and the procedure moves to step 1513.

In both channel arrangements, the pure spatial and the flat spatial arrangement, the BACK 626 button allows to jump to the previously watched channel whether the channel belongs to the same category or not.

According to the known methods of handling the situation in which the user manually inputs the channel number which is not existing on the list, the system jumps to the nearest existing channel number. Similarly if the user selects to jump to the next channel while watching the last channel in the list of channels, the system loops back to the first channel in the list. Similarly if the user is watching the first channel in the list and selects to jump to the previous channel, then the system loops to the last channel in the list.

The described method provides a more convenient navigating process through the channels in the content receiver, wherein the user can change either the channel category or the channel within the current category without the need of returning or opening the EPG screen with the list of channels.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for navigating through channels in a content receiver may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A computer-implemented method for navigating through channels in a content receiver (100), wherein the channels have assigned channel numbers and categories, the method comprising:
- providing a list of categories (1210-1280; 1310-1330);
- providing an ordered list of channels (1211-1212; 1311-1312) for each category (1210-1280; 1310-1330);
- upon receiving (1406, 1509) a channel zapping command (SIMILAR+, SIMILAR-), selecting (1407, 1510) a next channel or a previous channel (1211-1212; 1311-1312) from the list of channels for the current category (1210-1280; 1310-1330);
- upon receiving (1404, 1504) a category zapping command (NEXT, PREV), selecting (1405, 1508) a last watched channel (1201-1205; 1301-1303) in a next category or a previous category from the list of categories (1210-1280; 1310-1330) and changing the current category to the next category or the previous category;
- storing (1410, 1513) the channel number of the selected channel as the last watched channel on the current channel category; and
- tuning (1412, 1515) the content receiver to the selected channel.

2. The method according to claim 1, wherein the list of categories (1210-1280) contains a single instance of each category.

3. The method according to claim 1, wherein the list of categories (1310-1330) contains a plurality of entries for at least one category.

4. The method according to claim 3, wherein the consecutive categories on the list of categories (1310-1330) correspond to categories of consecutive channels in the content receiver.

5. The method according to claim 4, wherein upon receiving (1504) a category zapping command (NEXT, PREV), selecting (1507) the next channel or the previous channel (1311-1312) with respect to the last watched channel of the current channel category (1310-1330).

6. The method according to any of previous claims, further comprising, upon receiving a command to tune to a particular channel number, selecting (1408, 1511) the requested channel and changing (1409, 1512) the current category to the category of the requested channel.

7. A computer program comprising program code means for performing all the steps of the computer-implemented method according to any of claims 1-6 when said program is run on a computer.

8. A computer readable medium storing computer-executable instructions performing all the steps of the computer-implemented method according to any of claims 1-6 when executed on a computer.

9. A system for navigating through channels in a content receiver (100), the system comprising:
- a content receiving block (120) for providing content of a plurality of programs;
- a controller (110) configured to perform the steps of the method according to any of claims 1 to 6.

10. The system according to claim 9, further comprising a remote control unit (600) with a dedicated section of buttons comprising at least one of:
- a SIMILAR- button (621) and a SIMILAR+ button (622) configured to select the previous channel or the next channel within the current category;
- a NEXT button (623) and a PREV button (624) configured to select the next category or the previous category; and
- a BACK button (626) configured to select the previously watched channel.
